# EUROPEAN PATENT APPLICATION

(11) **EP 2 519 017 A2**
(43) Date of publication of application: **31.10.2012**
(21) Application number: 12165783.7
(22) Date of filing: 26.04.2012
(51) Int. Cl.: H04N 21/2547

(54) **Revenue sharing method and revenue sharing system using the same**

(30) Priority: 30.04.2011 US 201161481153 P; 23.09.2011 US 201113244050; 04.04.2012 KR 20120035077
(71) Applicant: Samsung Electronics Co., Ltd., Suwon-si, Gyeonggi-do, 443-742 (KR)
(72) Inventor: Tran, Dang Van, Niguel, CA California 92677 (US); Zheng, Xing, Irvine, CA California 92604 (US); Khoshgozaran, Jaffar, Pasadena, CA California 91106 (US); Zhu, Yingnan, Irvine, CA California 92612 (US)
(74) Representative: Bruce, Alexander Richard Henry

(57) **Abstract**

A revenue sharing method is disclosed. The revenue sharing method includes executing a main application which provides contents and a sub application which provides additional functions related to the main application in the user apparatus, searching for context information related to a revenue creating event in the user apparatus when the revenue creating event occurs through the sub application, determining a revenue sharing ratio by the revenue creating event regarding a revenue sharing object based on the searched context information in the server, and distributing revenue by the revenue creating event according to the determined sharing ratio.

## Description

Embodiments of the present invention relate to a revenue sharing method and revenue sharing system using the same, and more particularly to a revenue sharing method through an application store, and a revenue sharing system using the same.

Due to recent development of technologies, it has become possible to play various contents through various apparatuses. Especially, unlike conventional user apparatuses which simply provide only contents, today's apparatuses are provided with environments where various applications can be installed to provide more varied functions.

More specifically, there are apparatuses which can perform internet searching at the same time of playing contents, and where users may obtain information. In addition, user apparatuses may automatically provide such information. These functions may be provided through various applications that may be applied to playing apparatuses.

For example, revenue from these applications is shared in a one-dimensional way such that owners of application stores account for 30% of sales revenue while application developers account for 70%.

However, revenue from applications may be obtained not only by purchasing applications but also through various routes. For example, a user may view a movie using an application, and be provided with information such as items and places that appeared in the movie. In addition, the user may purchase in real time the items that appeared in the movie based on the provided information.

The current revenue sharing method has a problem that new revenues from such various routes cannot be shared efficiently.

An aspect of the exemplary embodiments relates to a revenue sharing method which efficiently distributes revenue created through an application and a revenue sharing system using the same.

According to an exemplary embodiment of the present disclosure, a revenue sharing method of a system which includes a user apparatus and server includes executing a main application which provides contents and a sub application which provides additional functions related to the main application, in the user apparatus; searching for context information related to a revenue creating event in the user apparatus, when the revenue creating event occurs through the sub application; determining a revenue sharing ratio by the revenue creating event regarding a revenue sharing object, based on the searched context information, in the server; and distributing revenue by the revenue creating event according to the determined sharing ratio.

Herein, the context information may be information on at least one of the main application, sub application, contents, user, user apparatus, surrounding environment of the user, contract relationship among the revenue sharing objects, and social networking data of the user or the user apparatus.

In addition, the context information on the contents may be included in meta data of the contents.

In addition, the sub application may provide a function of providing context information related to the contents, or of advertising or purchasing a product related to the contents.

The revenue creating event may be purchasing a product or providing an advertisement for purchasing a product through the sub application.

In addition, the revenue sharing object may be at least one of an application store, main application partner, and sub application partner, and may further include at least one user.

According to an exemplary embodiment of the present disclosure, a user apparatus connected to a server may include an application executing unit which executes a main application which provides contents and a sub application which provides additional functions related to the main application; a revenue creating event sensing unit which senses whether or not a revenue creating event occurred through the sub application; a context searching unit which searches for context information related to a revenue creating event, when the revenue creating event occurs; and an interface unit which transmits the searched context information to the server.

Herein, the context information may be information on at least one of the main application, sub application, contents, user, user apparatus, surrounding environment of the user, contract relationship among the revenue sharing objects, and social networking data of the user or the user apparatus.

In addition, the context information on the contents may be included in meta data of the contents.

In addition, the sub application may provide a function of providing context information related to the contents, or of advertising or purchasing a product related to the contents, and the revenue creating event may be purchasing a product or providing an advertisement for purchasing a product through the sub application.

Meanwhile, according to an exemplary embodiment of the present disclosure, a server connected to a user apparatus may include an interface unit which receives context information related to a revenue creating event from the user apparatus; and a revenue sharing unit which determines a revenue sharing ratio by the revenue creating event regarding a revenue sharing object based on the received context information, and distributes revenue according to the determined sharing ratio.

Herein, the revenue sharing object may be at least one of an application store, main application partner, and sub application partner, and the revenue sharing object may further include at least one user.

According to an exemplary embodiment of the present disclosure, a control method of a user apparatus may include executing a main application which provides contents and a sub application which provides additional functions related to the main application; searching for context information related to a revenue creating event, when the revenue creating event occurs through the sub application; and transmitting the searched context information to an external apparatus.

According to an exemplary embodiment of the present disclosure, a revenue sharing method of a server may include receiving context information related to a revenue creating event when the revenue creating event occurs through a sub application, in a state where a main application and a sub application which provides additional functions related to the main application are in operation in an external apparatus; determining a revenue sharing ratio by the revenue creating event regarding a revenue sharing object based on the context information; and distributing the revenue according to the determined sharing ratio.

Meanwhile, according to various exemplary embodiments of the present disclosure, the method may be stored in a storage medium where a program code programmed to perform the aforementioned methods is stored and may be performed.

The above and/or other aspects of the present disclosure will be more apparent by describing certain embodiments with reference to the accompanying drawings, in which:
FIG. 1 is a view for explaining a revenue sharing system according to an exemplary embodiment of the present disclosure;
FIG. 2 is a flowchart illustrating a method according to an exemplary embodiment of the present disclosure;
FIG. 3 is a block diagram illustrating a configuration of an apparatus according to an exemplary embodiment of the present disclosure;
FIG. 4 is a block diagram illustrating a configuration of an apparatus according to another exemplary embodiment of the present disclosure;
FIG. 5 is a block diagram illustrating a configuration of a user apparatus according to another exemplary embodiment of the present disclosure;
FIG. 6 is a block diagram illustrating a configuration of a server according to another exemplary embodiment of the present disclosure;
FIG. 7 is a flowchart illustrating a revenue sharing method of a system according to another exemplary embodiment of the present disclosure;
FIG. 8 is a flowchart illustrating a control method of a user apparatus according to an exemplary embodiment of the present disclosure; and
FIG. 9 is a flowchart illustrating a revenue sharing method of a server according to an exemplary embodiment of the present disclosure.

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

The present disclosure relates to a "sub application". The "sub application" may be executed by a user apparatus and provide information to a user. Such a sub application may use context information in order to request a sub application partner for information to be provided to a user. The context information includes information on the contexts itself, user, user apparatus, general environment or social network. When the information to be provided to the user is received from the sub application partner, it may be displayed on the user apparatus. In this method, the sub application automatically searches for information related to the contents currently being played, and provides a function of displaying the information to viewers when the contents are played.

In addition, the context information may be used as information for determining a parameter. In some embodiments, the parameter is revenue sharing. A share amount for a revenue sharing object may be changed dynamically according to the context information. A sub application framework creates "toll bridges" among a main application partner, sub application partner, and user that are separated from one another. Each of these toll bridges may provide a new type of revenue sharing method. It may provide an optimized revenue sharing method regarding various revenue creating routes and may be changed dynamically according to time or circumstances based on various context information.

Context information may be searched through numerous sources. One of these sources are contents (or media) which are played by a user apparatus. Such context information is 'contents context information' and may include any information on the context. The contents context information may be meta data included in the contents. In a case where the contents are television broadcasting contents, the contents context information may be inserted in a broadcasting stream. Regarding an OTT (Over The Top) VOD (Video On Demand) image or photograph, the contents context information may be encrypted in a downloaded contents file or be transmitted individually. In case of a DVD or Blu-Ray disk, the contents context information may be encrypted in the disk itself (inside an exclusive meta data file), or may be used in the outside as well just as when using an external GD3 identifying database. A general image, photograph or music file stored in a hard disk drive may include meta data information inside it just as an xif file of a digital camera. In case of a Digital Living Network Alliance (DLNA) stream, the stream may be included in an internal meta data. The contents context information may include information regarding for example, a title, genre, actor/actress, director, running time, screen information, music track, and writer. In addition, an additional file stream which may be obtained from a social networking website or video streaming web site may also be used. Furthermore, a file which may be obtained from an application and not from contents such as news, map, and game etc. may also be used as context information.

A 'contents provider (or contents providing company)' in the present disclosure may be interpreted broadly to include any object that provides information and services that a user wants. The contents provider may include main text information, graphic information, shopping ability, and mapping tools etc.. In addition, this term may include not only the service provider but also traditional contents providers such as a movie studio, distributor, television broadcasting station, and website. Sometimes the "service provider" and "contents provider" are used differently, but many times the boundary of the two terms is not strictly defined, and thus the "contents provider" in the present disclosure should be interpreted to mean a concept which includes all such providers.

The term 'contents' in the present disclosure may be interpreted broadly to mean not only general images, photographs, and letters but also information that the user may see and hear. Therefore, the 'contents' may include, for example, letters in a newsreader application, map in a mapping application, or graphics in a game application. Therefore, the 'contents context information' may also include context information of a broad range. 'Main application contents' may come from various sources including a DVD and HDMI port, as a result of searching a sub application.

A 'sub application' in the present disclosure may be interpreted broadly to include any application that can be installed in a user apparatus. However, in some exemplary embodiments, the sub application may be one that is connected to another application or service and that provides partial functions (micro functions or services) in the main application or service. For example, Amazon application may provide a full user interface to the Amazon.com market, but an Amazon sub application may provide only limited partial functions (for example, an automatic searching function based on context information and limited purchasing ability). Herein, the partial functions refer to functions which perform only one operation such as 'adding to a shopping basket' or 'adding an interested product'.

The concept of a main application is developing even further. In general, a main application refers to a software application which may be executed independently, but may also mean an HTML page which can be operated naturally in a user apparatus rather than being downloaded or stored in the user apparatus. The same phenomenon may happen in a television application, and rather than downloading or storing the application in an application store, the application may be suited to a user's demand and become a pointer to a web source providing information suitable to the TV. The 'main application' in the present disclosure is interpreted broadly to include such exemplary embodiments.

There are various context information other than contents context information. One of them is a user. Various information regarding the user may be searched implicitly or explicitly. For example, user information containing information such as age, gender, hobby, and occupation may be stored. 'User context information' may be used to determine which information to search for and to provide to the user. For example, if a family is viewing a documentary program about Africa, picture information (information that can be transmitted directly to children's apparatus) on lions, giraffes, and rhinoceros may be provided at the same time as original information on the history of a region that appears on a screen is provided to an adult's apparatus (or common use apparatus). Such a system may include not only the contents context information but also user context information, thereby providing information suited to each user as aforementioned to each user apparatus.

A user profile is an example of user context information which is explicit. However, the user context information may also be assumed from an implicit source. For example, it is possible to determine, by examining an application usage history (including loaded applications) of the user apparatus, that the user is a child or an adult. For example, if there were many games that children usually play, it would be possible to assume that the user of that user apparatus is a child. The user context information may be determined from the application usage history.

Another context information is an apparatus such as a television, cell phone, and computer. Various information on this apparatus may be searched explicitly or implicitly. For example, in an apparatus profile, apparatus information such as manufacturer, processor speed, display characteristics, and input device may be stored. 'Apparatus context information' may be used in determining which information to search and provide to the user. For example, when a family is watching a comedy program, it would be possible to provide information related to the main character such as information on his/her recent work to various apparatuses. Herein, if there is an apparatus which has better processing speed, memory capability, and display characteristics than other apparatuses, it would be desirable to provide the video image trailer of recent films in which the main character starred to the apparatus having a good performance, while providing original text information on new films of the main character to the other apparatuses.

The apparatus profile is an example of explicit apparatus context information, but the apparatus context information may be assumed from an implicit source as well. For example, if many high definition image files were stored in the user apparatus, it may be possible to assume that the apparatus has excellent performance which could play high definition images. The apparatus context information may be determined from a type of content stored in the user apparatus.

Another context information is an environment where the user apparatus operates. Such context information may include various matters including environment information of the outside such as time, temperature, and location, and environment information of the inside such as operation systems and other applications being operated at the same time. 'Environment context information' may be used to determine which information to search for and provide to the user. For example, if the location of the user apparatus is 'home', additional data being downloaded in a sub application partner would have more entertaining tendency than when the location of the apparatus is 'workplace'.

External environment context information may be searched in various external sensors or user apparatuses. For example, in the case of time, a clock apparatus located in a main circuit may be used. In the case of location, a Global Positioning System (GPS) or a similar tracking apparatus may be used. In the case of temperature, a temperature sensor may be used. As an alternative, location information may be provided in an external database from which the location where the current temperature may be searched can be known

Another context information is social networking data. For instance, in order to determine state information on the user in a social networking web site or data stream, user state information may be searched and the searched user information may be used to determine which information to search for and to provide to the user. For example, if the user set a facebook state as 'on vacation', a search result different from one that would be searched when the user set the facebook state as 'working' would be provided.

Another context information is a business partnership among a configuration body within the revenue sharing system. For example, a contents provider, an application store and application developer may successfully lead a contract, and may use information derived as a result of the contract in determining a revenue sharing ratio.

Meanwhile, to each context information, a different weight may be applied according to other context information. For example, in the case where two users operate a same apparatus, a different weight may be applied according to the user.

In another exemplary embodiment of the present disclosure, a "middleware" framework separates a sub application partner from the sub application. It may even be separated from a sub application company according to some exemplary embodiments. The framework may make it unnecessary for the sub application partner to perceive the sub application company, vice versa. The two objects may be simply programmed, in contrast to middleware framework APIs. In this method, regarding applications and sources such as Blu-Ray, Netflix, DLNA media, WiseLink, and a widget which is not a media, it is possible to jointly operate with other services such as a sub application. In addition, the framework may automatically provide other contexts and an integrated user interface for other apparatuses. By using various artificial intelligence engines, the framework may automatically improve the quality of micro service search results. An algorithm may include a flexible lookup table based on various context information.

It is possible to expect various mechanisms for turning the process and system into revenues. In an exemplary embodiment, the sub application partner may compensate a system operator, manufacturer (for example, an operator of the sub application store) or a contents providing company which encoded contents data with appropriate meta data. Such compensations may be based on a product purchase which used the sub application, and enables the sub application store and media company to be compensated with the revenue when the user purchases the product from the sub application partner (for example, when purchasing a doll in Amazon).

In another exemplary embodiment, such a compensation may be based on a number of pages opened (number of clicks) for purchasing or searching a product, and this number of opened pages is transmitted from the sub application store to the sub application and then to the sub application partner. This method of compensating every time a click is made may be more useful to a sub application partner which creates revenue from advertisements like sub application partner mapping and not by selling products. In another exemplary embodiment, revenue may be regularly paid according to a partnership contract among the sub application partner, sub application store operator, and the contents providing company.

In another exemplary embodiment of the present disclosure, in a case where the sub application store creates a new opportunity to provide the user's contents to the contents providing company, the contents providing company (for example, Netflix) may share the revenue created by providing the contents to the user with the sub application store operator.

In another exemplary embodiment of the present disclosure, a promotion recommending system may include another object other than the contents providing company, sub application store operator, and the sub application partner. For example, in a case of creating revenue for one of the contents providing partner or the sub application partner, this system may include a process of sharing revenue with an owner of an additional website (promotion site) which transmits traffic to the sub application store. This system may be configured to track a related ID in order to have guarantee on appropriate credit. For example, such an ID may be tracked as part of a cookie stored during a network session.

In another exemplary embodiment of the present disclosure, a certain sub application may be regarded as a premium sub application which induces the user to purchase other sub applications or receive contents in the sub application store. Revenue created accordingly is shared with the contents providing company and/or the sub application partner.

In another exemplary embodiment of the present disclosure, revenue created by renting or purchasing digital information from one of the contents providing company or sub application partner may be shared with the contents providing company, sub application store operator and/or sub application partner.

As aforementioned, sharing revenue may be made based on context information for flexibly changing the revenue sharing ratio applied to an object in the system. Such revenue sharing may be changed according to the form in which the revenue is shared, but in general, an object participating in a series of activities of purchasing and recommending a product or service may receive a certain ratio of the revenue. For example, the revenue is not simply shared by the application store operator and the application developer, but rather, the sub application partner may receive some share. For example, Amazon sub application is executed in such a way that searching for context information is possible in a Netflix streaming video main application of the movie currently on screen. Herein, Amazon sub application may make it possible for related product information received from Amazon database to be provided to viewers. If a viewer purchases a product, the revenue may be shared by the Netflix (main application partner), Amazon (sub application partner), and application store operator. In addition, there is a case where a viewer doesn't purchase the product but recommends it to a friend, and the friend of the viewer purchases the product. In such a case, the viewer may also be a revenue sharing object.

Revenue may also be shared based on an element other than a simple purchase of a product (for example, based on number of reviews of the product). The sub application partner may determine whether or not to share the revenue with the participant for only receiving an opportunity to sell a product. That is, the sub application partner may pay money to the application store operator and/or main application partner every time a product is shown to a viewer.

In addition, in another exemplary embodiment of the present disclosure, the context information itself may change a parameter of revenue sharing. Unlike conventional advertisements, a revenue sharing parameter exists to display products to numerous viewers in exactly the same environment. For instance, even if viewer A and viewer B are watching the same movie at the same time through the same type of apparatus, revenue sharing parameter for viewer A and revenue sharing parameter for viewer B may be different from each other. Context information which becomes a basis for such a revenue sharing parameter may be very different every time it is executed. For example, user profile information such as age, gender, and hobby may allow a product to have different revenue sharing parameters depending on the user. Accordingly, the sub application partner may pay a higher ratio of revenue to a user having a higher purchasing probability. In the core population statistical group, these people are those who may become a frequent client.

Revenue sharing parameter which has its basis on the context information may be affected by elements other than the user information. For example, since viewers tend to purchase products at night rather than at daytime, the sub application partner may determine to pay a higher ratio of revenue at night. Furthermore, for the same reason, the sub application partner may determine to pay a higher ratio of revenue when the weather is good than when the weather is bad.

A revenue sharing parameter may be changed in real time depending on the selected context information. And the revenue sharing parameter may be manually designated or determined by using an algorithm. The revenue sharing parameter allows a completely flexible system which can easily be optimized, so as to provide a best result where all participants can be included.

In an exemplary embodiment, it is possible to share more configurative bodies in the revenue flow than aforementioned. For example, a 'middle partner' which has a related sub application may shut off contents that are being played or displayed, and may increase the contexts of the contents together with additional contexts. Then, the middle partner may share the flexibly applied revenue ratio.

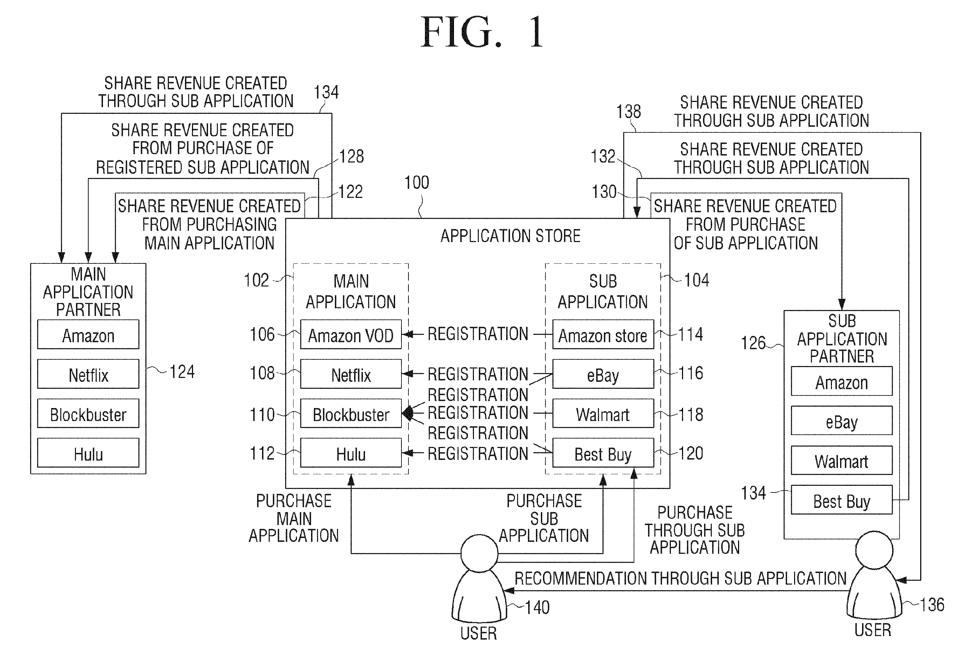

FIG. 1 is a view explaining a revenue sharing system according to an exemplary embodiment of the present disclosure.

With reference to FIG. 1, an application store 100 may provide a sub application 104 and a main application 102 for free or paid downloading. In such an example, the main application may be Amazon ordering type video 106, Netflix streaming video 108, blockbuster streaming view 110, and Hulu streaming video 112.

In addition, as the sub application, Amazon store 114, eBay 116, Wal-Mart 118, and Best Buy 120 are provided. Each main application and sub application disclosed in FIG. 1 is merely an example for convenience of explanation, and thus it is obvious that other various applications may also be used. Each sub application 104 may be registered in one or more main applications 102. In the present exemplary embodiment, there may be various potential revenue flows. First of all, when a user purchased and downloaded the main application, the application store may share the revenue with the main application partner. This can be explained by route 122. Herein, revenue sharing may be based on each user, apparatus or each transaction. In addition, a revenue sharing ratio may change in real time based on the context information.

The main application may approach the sub application, and the sub application is registered in the main application. Registration is not prerequisite, but for the sub application to be connected to the main application, the sub application informs that it is part of the revenue flow through the registration process. The main application may determine which sub application to display, the order to display the sub application, which presentation style and preview to use, and the portion to display the sub application. When a user purchases the sub application, the sub application store may create revenue to be shared with the main application partner 124 and the sub application partner 126. Of course, the revenue sharing parameter sub application may change according to the order the sub application is displayed, presentation style, and preview. For example, a sub application which is displayed in such a manner to be seen easily by the user's eyes or to be played frequently (in a case where the sub application is on the top side of the playing list or has a special font or form) may provide a higher ratio of revenue to the main application partner than in a case where the sub application is not seen easily or played less frequently. Selection 128 illustrates sharing the revenue created by a purchase of a registered sub application with the main application partner. 130 illustrates sharing the revenue created by a purchase of the same sub application with the sub application partner. In addition, an apparatus parameter, that is apparatus context information itself changes the revenue sharing ratio. For example, an advertising price for displaying on a 65 inch television may be calculated differently than for advertisements displayed on a 32 inch television or 3 inch mobile phone.

Another revenue flow is occurred by the micro function of the sub application. This includes not only purchasing products using the micro function but also activities not related to purchasing products. For example, the sub application partner may compensate the main application partner for all searches made through the micro function. As such, 132 illustrates a certain ratio of revenue transmitted from the sub application partner. The sub application partner has already received a purchase request of a product through the sub application 120. Revenue is transmitted from Best Buy 132 to the application store 100. Next, the application store 100 shares a portion or all of the revenue with an appropriate main application partner. Such a revenue sharing is illustrated in 134. In a case where a user 140 ultimately purchased a product that a user 136 recommended, the user 136 may also share the revenue created by purchasing through the micro function.

It should be noted that a revenue sharing ratio may be flexibly changed based on the aforementioned elements. It may be adjusted in a perspective such as an additional compensation based on the aforementioned elements. For example, the application store may compensate the service provider by making the applications in the application store more noticeable or to be shown more frequently. Not only the ratio of compensation, that is, the revenue sharing ratio may be adjusted flexibly but also the form of compensation may be adjusted flexibly.

Tracking revenue flow may be executed in various methods. In an exemplary embodiment, an object who wishes to participate in a revenue flow (including main application partner, sub application partner, and user) may register in an application store, and an application store manages revenue sharing based on a matrix maintained by the application store. In another exemplary embodiment, a revenue sharing management service by a 3rd party may be used.

In another exemplary embodiment, not the context information itself but the amount of context information may be used to change the revenue sharing ratio. For example, apparatuses which share much context information may receive a higher ratio of revenue than apparatuses which share less context information. Likewise, a sub application partner which provides much context information going back to the main application may receive a higher share than the sub application partner which provides less context information going back to the main application. A similar concept may apply to "quality". For example, based on a certain metric, a sub application which provides a result quickly or which provides more related results may receive more compensation than a sub application that does not.

In another exemplary embodiment in the present disclosure, user feedback may be considered when determining a revenue sharing ratio. For example, if the user logged in to a search result for a long time, or rather than simply viewing the result, shared the result with a friend or added in his/her bookmark, or logged in to the result longer by other methods, the provider of the result may receive more compensation with a higher revenue sharing ratio.

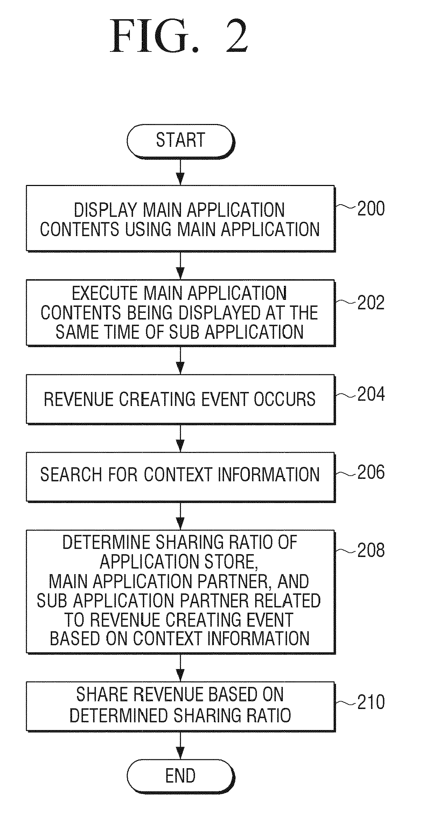

FIG. 2 is a flowchart illustrating a method according to an exemplary embodiment of the present disclosure. In step 200, the main application contents are displayed using the main application which is related to the main application partner and is downloaded in the application store. In step 202, the sub application is executed at the same time the main application contents are played in a first apparatus. Step 204 relates to a revenue creating event of the first apparatus. A revenue creating event may be anything as long as it could directly or indirectly create revenue to someone. The most frequent example is a purchase by the user of the first apparatus in the product, service, sub application, or main application while using an interface of the sub application. Another examples of a revenue creating event may include a case when a sub application partner which wants to provide compensation displays a link in the sub application or a purchase by another user.

Step 206 searches for the current context information. This context information may be searched in various methods. In an exemplary embodiment, the main application contents context information may be installed inside a contents file or media stream as meta data, and the sub application may search for this installed context information and then use or read it. In another exemplary embodiment, in relation to only the sub application or other applications, the main application contents context information may be searched or assumed with regard to other applications that could be executed in itself or in a separate apparatus (in an apparatus such as a server where the sub application requests for information through the internet).

In step 208, a certain ratio of shared revenue related to the revenue creating event may be flexibly shared by each of the application store, main application partner, and sub application partner based on the current context information. It should be noted that in another exemplary embodiment, more than one user may receive a certain ratio of revenue. For example, if the user recommended a final result regarding the revenue creating event to another user, that user may receive a certain ratio of revenue (only if the other user purchased the product based on the recommendation). In step 210, the revenue related to the revenue creating event is shared by the application store, main application partner and sub application partner according to the flexibly determined revenue sharing ratio. In exemplary embodiments where one or more users receive a certain revenue sharing ratio, those users may also receive the revenue according to the determined revenue sharing ratio in this step.

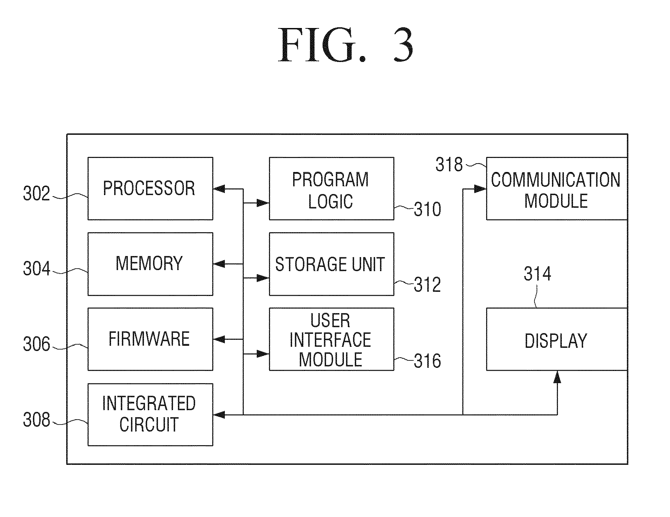

FIG. 3 is a block diagram illustrating a configuration of an apparatus according an exemplary embodiment of the present disclosure. In this exemplary embodiment, this apparatus 300 may include a processor 302, memory 304, firmware 306, integrated circuit 308, program logic 310, storage unit 312, display screen 314, user interface module 316, and communication module 308. Herein, the communication module 318 may be a network interface apparatus or a wireless radio transmitter/receiver.

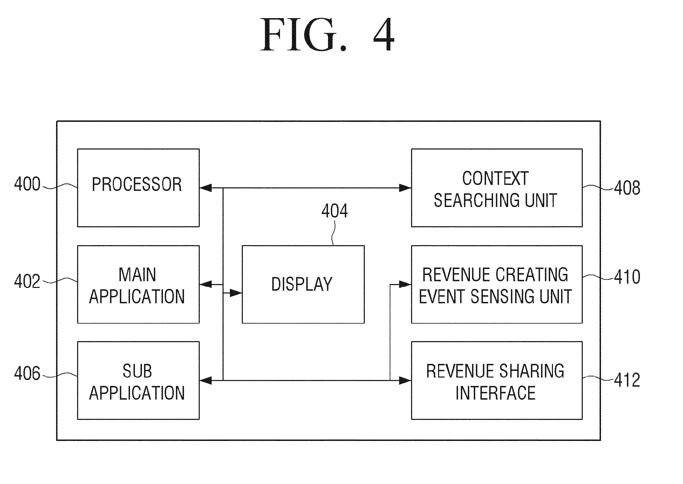

FIG. 4 is a block diagram illustrating a configuration of an apparatus according to another exemplary embodiment of the present disclosure. The processor 400 may control each element to perform various functions of the present disclosure. The main application 402 may be executed to display the main application contents on the display 404. The sub application 406 may be executed at the same time of the main application contents being displayed on the display 404. A context searching unit 408 may be configured to search the current context information. In addition, the context searching unit 408 may include at least one hardware sensor such as a clock, thermometer, and GPS apparatus.

The revenue creating event sensing unit 410 may sense the revenue creating event by the sub application 406. When the revenue creating event sensing unit 410 senses the revenue creating event by the sub application, the revenue sharing interface 412 may transmit the current context information to the main subject. In addition, the main subject may flexibly share the shared revenue with each of the application store, main application partner related to the main application, and the sub application partner related to the sub application based on the current context information. The revenue related to the revenue creating event may be shared based on a flexibly determined sharing ratio. Herein, the main subject of revenue sharing refers to a main subject who directly distributes the revenue to the revenue sharing objects, and may be an additional apparatus such as a server or processor.

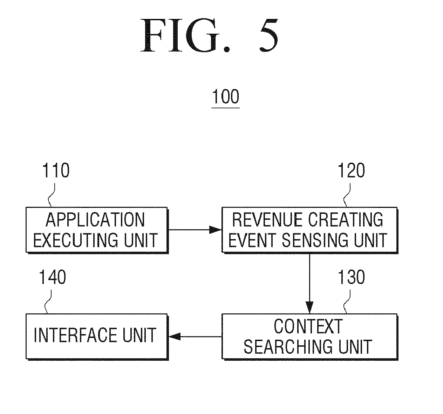

FIG. 5 is a block diagram illustrating a configuration of a user apparatus according to another exemplary embodiment of the present disclosure.

According to FIG. 5, the user apparatus 100 includes an application executing unit 110, revenue creating event sensing unit 120, context searching unit 130, and interface unit 140.

The application executing unit 110 executes the main application and sub application. More specifically, the application executing unit 110 may execute the main application which provides contents and the sub application which provides additional functions related to the main application. As aforementioned, the main application executes or plays the main application contents, and the sub application is an application which is registered in the main application and performs micro functions (or additional functions). More specifically, a micro function refers to providing context information related to the contents, or providing advertising or purchasing functions for a product related to the contents.

The revenue creating event sensing unit 120 senses whether or not a revenue creating event has taken place through the sub application. Herein, the revenue creating event refers to a purchase of a product (service) or provision of an advertisement for product purchasing through the sub application.

The context searching unit 130 searches for context information related to the revenue creating event. More specifically, when a revenue creating event is sensed in the revenue creating event sensing unit 120, the context searching unit 130 may search for the context information related to the revenue creating event in order to determine the revenue sharing ratio.

Herein, the context information may be one of the information on the main application, sub application, contents, user, user apparatus, surrounding environment of the user apparatus, contract relationships among the revenue sharing objects or social networking data of the user apparatus.

The interface unit 140 is connected to the server. More specifically, the interface unit is connected to the server, and transmits the context information searched in the context searching unit 130 to the server. The interface unit 140 may communicate with the server using wireless communication methods such as Wifi, Bluetooth, IRDA (Infrared Data Association), RF (Radio Frequency), IEEE 802.11, WLAN, HR WPAN, UWB, LR WPAN, IEEE 1394 or wired communication methods such as UART (Universal Asynchronous Receiver/Transmitter), I2C, IEEE 1394.

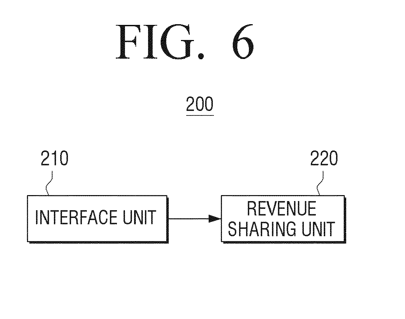

FIG. 6 is a block diagram illustrating a configuration of a server according to another exemplary embodiment of the present disclosure. According to FIG. 6, the server 200 includes an interface unit 210 and revenue sharing unit 220.

The interface unit 210 receives context information from the user apparatus. More specifically, it receives the context information from the interface unit 140 of the user apparatus 100. The received context information is context information related to the revenue creating event searched in the context searching unit 130.

The revenue sharing unit 220 determines the revenue sharing ratio based on the context information received from the interface unit 210, and distributes the revenue based on the determined sharing ratio. As aforementioned, the revenue sharing ratio may be determined by various elements and may be flexibly changed.

Herein, the revenue sharing object may be at least one of the application store, main application partner, and sub application partner. In addition, in the case where the user participated in a revenue creating flow by recommending a product (or service) to another user, at least one more user may be included.

Meanwhile, in FIGs. 5 and 6, the user apparatus and server included in the revenue sharing system are illustrated to be separate apparatuses, but in a case where the user apparatus performs functions of a server as well, these apparatuses may be embodied as one apparatus. In such a case where the user apparatus and server are embodied as one apparatus, configuration of the interface unit 140, 210 would be omittable.

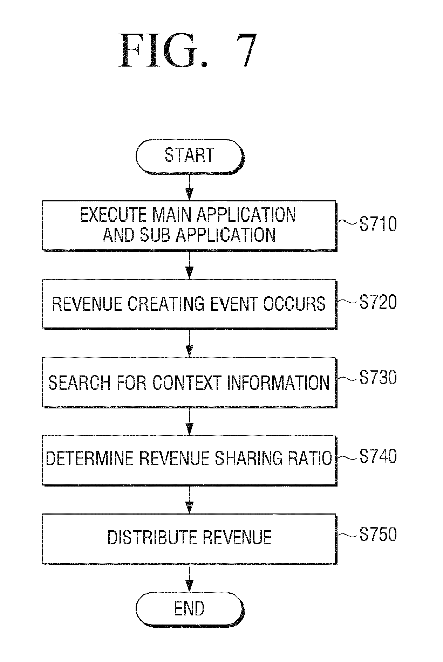

FIG. 7 illustrates a flowchart of a revenue sharing method of a system according to another exemplary embodiment of the present disclosure.

According to FIG. 7, in the user apparatus, the main application and sub application are executed (S710). Herein, the main application provides contents to the user, and the sub application provides additional functions related to the main application. Additional functions refer to functions of providing context information related to the contents or of advertising or purchasing items related to the contents.

In addition, when a revenue creating event occurs (S720), the user apparatus searches for context information (S730). More specifically, the user apparatus searches for context information related to the revenue creating event in order to determine the revenue sharing ratio regarding the objects which participated in the revenue flow. The revenue creating event refers to purchasing a product or providing an advertisement for purchasing a product. Then, a revenue sharing ratio according to the revenue creating event regarding the revenue sharing object is determined based on the context information searched in step 730 (S740). In addition, according to the determined sharing ratio, the revenue is shared (S750).

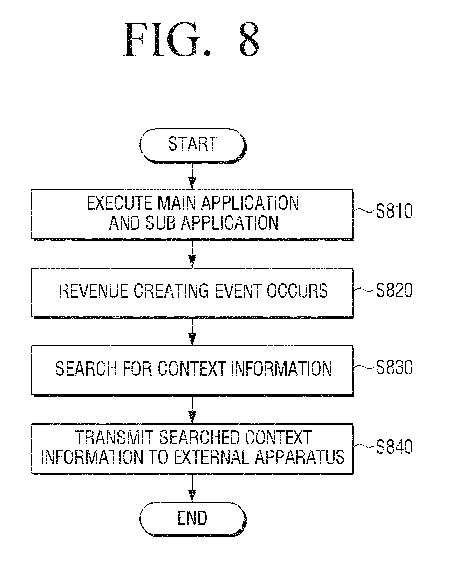

FIG. 8 is a flowchart illustrating a control method of a user apparatus according to an exemplary embodiment of the present disclosure.

According to FIG. 8, in the user apparatus, the main application and sub application are executed (S810), and when the revenue creating event occurs (S820), the user apparatus searches for context information related to the revenue creating event (S830). Herein, the user apparatus transmits the searched context information to an external apparatus (S840). Herein, the external apparatus may be a server for revenue sharing.

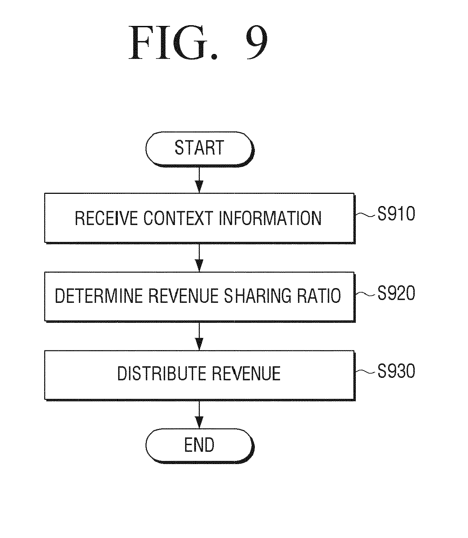

Fig. 9 is a flowchart illustrating a revenue sharing method of a server according to an exemplary embodiment of the present disclosure.

According to FIG. 9, context information is received from the external apparatus (S910). The received context information is context information related to the revenue creating event. More specifically, in a state where the sub application which provides the main application and additional functions related to the main application is in operation, when the revenue creating event occurs through the sub application, the external apparatus searches for context information related to the revenue creating event. In addition, a ratio sharing ratio regarding the revenue sharing object is determined based on the received context information (S920), and the revenue is shared according to the determined revenue sharing ratio (S930). Meanwhile, the method according to FIGs. 8 and 9 may be performed by one apparatus as aforementioned.

In an exemplary embodiment of the present disclosure, the aforementioned system is expanded to a cloud. For example, context information which is not processed may be searched in other numerous apparatuses. Consumers are accumulating digital assets and are using more and more internet services. Consumers usually approach such information and services using one or more apparatuses. A general consumer may have a desktop, portable computer, mobile phone etc. which are used to approach and collect information and media. As long as enormous amounts of services and contents are used on the web everyday, this trend will continue. Such information and services may not only be scattered in various user apparatuses but they may also exist in informal information groups. A cloud is a formal or informal information group which is based on a control. The present disclosure may also expand the context system increased by similar methods. In addition, in contrast to apparatuses such as televisions and mobile phones, a logic which senses or creates the revenue sharing event may be located within the cloud.

The aforementioned exemplary embodiments of the present disclosure may be executed by various methods such as orders executed by a processor, software module, micro code, computer program stored in media readable by a computer, logic circuit, application specified integrated circuit, firmware, and consumer electronic apparatuses, or may be applied to a wireless apparatus, voiceless transmitter/receiver or other wireless network. In addition, the aforementioned exemplary embodiments of the method and system may be embodied as one that includes a hardware, software, or both the software and hardware.

'Media readable by a computer' is a term generally used to refer to media such as a main memory, 2nd memory, removable storage apparatus, hard disk, flash memory, disk drive memory, CD-ROM, and other permanent memory formats. The storage apparatus including a computer program code for executing the various methods disclosed in the present disclosure should not be understood as one that includes carrier waves or temporary things such as a carrier wave signal. The program storage apparatus and media readable by a computer are terms used to mention a main memory, 2nd memory, removable disk, hard disk drive, or other types of storage apparatuses.

In addition, a program for performing a method according to the various exemplary embodiments of the present disclosure may be stored in various types of recording media and be used.

More specifically, a code for performing the aforementioned methods may be stored in various types of non-volatile recording media such as a flash memory, ROM (Read Only Memory), EPROM (Erasable Programmable ROM, EEPROM (Electronically Erasable and Programmable ROM), hard disk, removable disk, memory card, USB memory, and CD-ROM.

Although a few embodiments of the present invention have been shown and described, it would be appreciated by those skilled in the art that changes may be made in this embodiment without departing from the principles of the invention, the scope of which is defined in the claims.

## Claims

1. A user apparatus for connection to a server, the user apparatus comprising:
an application executing unit configured to execute a main application which provides contents and a sub application which provides additional functions related to the main application;
a revenue creating event sensing unit configured to sense whether or not a revenue creating event occurred through the sub application;
a context searching unit configured to search for context information related to a revenue creating event, when the revenue creating event occurs; and
an interface unit configured to transmit the searched context information to the server.

2. The user apparatus according to claim 1, wherein the context information is information on at least one of the main application, sub application, contents, user, user apparatus, surrounding environment of the user, contract relationship among the revenue sharing objects, and social networking data of the user or the user apparatus.

3. The user apparatus according to claim 1 or claim 2, wherein the sub application provides a function of providing context information related to the contents, or of advertising or purchasing a product related to the contents.

4. The user apparatus according to any one of claims 1 to 3, wherein the revenue creating event is purchasing a product or providing an advertisement for purchasing a product through the sub application.

5. A server for connection to a user apparatus, the server comprising:
an interface unit configured to receive context information related to a revenue creating event from the user apparatus; and
a revenue sharing unit configured to determine a revenue sharing ratio by the revenue creating event regarding a revenue sharing object based on the received context information, and distributes revenue according to the determined sharing ratio.

6. A control method of a user apparatus, the method comprising:
executing a main application which provides contents and a sub application which provides additional functions related to the main application;
searching for context information related to a revenue creating event, when the revenue creating event occurs through the sub application; and
transmitting the searched context information to an external apparatus.

7. A revenue sharing method of a system which includes a user apparatus and server, the method comprising:
executing a main application which provides contents and a sub application which provides additional functions related to the main application, in the user apparatus;
searching for context information related to a revenue creating event in the user apparatus, when the revenue creating event occurs through the sub application;
determining a revenue sharing ratio by the revenue creating event regarding a revenue sharing object, based on the searched context information, in the server; and
distributing revenue by the revenue creating event according to the determined sharing ratio.

8. The method according to claim 7, wherein the context information is information on at least one of the main application, sub application, contents, user, user apparatus, surrounding environment of the user, contract relationship among the revenue sharing objects, and social networking data of the user or the user apparatus.

9. The method according to claim 7 or 8, wherein the context information on the contents is included in meta data of the contents.

10. The method according to any one of claims 7 to 9, wherein the sub application provides a function of providing context information related to the contents, or of advertising or purchasing a product related to the contents.

11. The method according to any one of claims 7 to 10, wherein the revenue creating event is purchasing a product or providing an advertisement for purchasing a product through the sub application.

12. The method according to any one of claims 7 to 11, wherein the revenue sharing object is at least one of an application store, main application partner, and sub application partner.

13. The method according to claim 12, wherein the revenue sharing object further comprises at least one user.

14. A revenue sharing method of a server, the method comprising:
receiving context information related to a revenue creating event when the revenue creating event occurs through a sub application, in a state where a main application and a sub application which provides additional functions related to the main application are in operation in an external apparatus;
determining a revenue sharing ratio by the revenue creating event regarding a revenue sharing object based on the context information; and
distributing the revenue according to the determined sharing ratio.

15. A storage medium comprising a program code programmed to perform a method according to any one of claims 6 to 14.
